# EUROPÄISCHE PATENTSCHRIFT

(11) **EP 3 152 990 B1**
(45) Veröffentlichungstag und Bekanntmachung des Hinweises auf die Patenterteilung: **21.03.2018**
(21) Anmeldenummer: 16401057.1
(22) Anmeldetag: 07.09.2016
(51) Int. Cl.: A01B 21/08, A01B 63/24

(54) **BODENBEARBEITUNGSGERÄT**
SOIL CULTIVATION DEVICE
APPAREIL DE TRAVAIL DU SOL

(30) Priorität: 29.09.2015 DE 102015116433
(43) Veröffentlichungstag der Anmeldung: 12.04.2017
(73) Patentinhaber: Amazonen-Werke H. Dreyer GmbH & Co. KG, 49205 Hasbergen (DE)
(72) Erfinder: Schwope, Reinhard, 06258 Schkopau / OT Wallendorf (DE); Scherf, Silvio, 39444 Hecklingen OT Cochstedt (DE)

(56) Entgegenhaltungen:
- EP-B1- 1 569 506
- EP-B1- 1 750 495
- WO-A1-2013/090826
- US-A1- 2015 053 442

## Beschreibung

Die Erfindung betrifft ein Bodenbearbeitungsgerät gemäß des Oberbegriffes des Patentanspruches 1.

Ein derartiges Bodenbearbeitungsgerät ist beispielsweise in der EP 1 750 495 B1 beschrieben. Dieses Bodenbearbeitungsgerät weist einen Rahmen auf, an dem in zumindest zwei Querreihen hintereinander angeordnete und in den Boden eingreifende und schräg zur Fahrtrichtung angestellte Bodenbearbeitungswerkzeuge, insbesondere drehbar angeordnete Scheibenelemente, angeordnet sind. Die Bodenbearbeitungswerkzeuge sind in der einen Querreihe entgegengesetzt schräg zu den Bodenbearbeitungswerkzeugen in der anderen Querreihe angeordnet. Der Rahmen stützt sich auf seiner Rückseite über zumindest eine auf dem Boden abrollende Nachlaufeinrichtung, der zumindest eine zwischen dem Rahmen und der Nachlaufeinrichtung angeordnete Verstelleinrichtung zugeordnet ist, in höhenverstellbarer Weise und auf seiner Vorderseite über zumindest eine auf dem Boden abrollende Abstützeinrichtung, der zumindest eine zwischen dem Rahmen und der Abstützeinrichtung angeordnete Verstelleinrichtung zugeordnet ist, in höhenverstellbarer Weise angeordnet ist, ab. Normalerweise sind die in den Boden eingreifenden, hier als Scheibenelemente ausgebildeten Bodenbearbeitungswerkzeuge in der vorderen Querreihe und die in den Boden eingreifenden als Scheibenelemente ausgebildeten Bodenbearbeitungswerkzeuge in der hinteren Querreihe so eingestellt, dass sie mit gleicher Eingriffstiefe in dem Boden eingreifen. Hierdurch kommt es aber sehr häufig zu einem seitlichen schräg stellen bzw. zu einem herüberziehen zu einer Seite des Bodenbearbeitungsgerätes, so dass es sich nicht mehr mittig hinter dem Zugfahrzeug befindet. Hierzu werden dann, wie beispielsweise in der EP 1 569 506 B1 beschrieben ist, mit zwischen dem Rahmen und den vorderen und hinteren Querbalken, an dem die Scheibenelemente jeweils angeordnet sind, angeordneten einzelnen Stellelementen einer Verstelleinrichtung die Scheibenelemente der vorderen oder hinteren Querreihe gegenüber dem Rahmen und zueinander in der Höhe verstellt, so dass mittels dieser Verstellung die Scheibenelemente der vorderen Querreihe und der hinteren Querreihe mit unterschiedlichen Tiefe in den Boden eingreifen, so dass die auf die Scheibenelemente in der vorderen und hinteren Querreihe einwirkenden Seitenkräfte zumindest annähernd gleich groß sind.

Diese Ausgestaltung der Anordnung der Verstellung des vorderen Querbalken und des hinteren Querbalken zueinander und gegenüber dem Rahmen mittels der dort angeordneten Stellelemente ist und die Verstellung selbst ist jeweils relativ aufwändig. So muss immer bei wechselnden Bodenverhältnissen diese aufwändige Verstellung vorgenommen werden.

Der Erfindung liegt die Aufgabe zu Grunde, die Eliminierung des Seitenzuges durch Verstellen der hinteren Querreihe zur vorderen Querreihe zueinander wesentlich zu vereinfachen.

Diese Aufgabe der erfindungsgemäß dadurch gelöst, dass der hinteren und/oder vorderen Verstelleinrichtung eine Stelleinrichtung zur Höhenverstellung der Bodenbearbeitungswerkzeuge in der hinteren Querreihe gegenüber den Bodenbearbeitungswerkzeugen in der vorderen Querreihe zugeordnet ist.

Infolge dieser Maßnahme können in relativ einfacher Weise die Bodenbearbeitungswerkzeuge in der hinteren Querreihe gegenüber den Bodenbearbeitungswerkzeugen in der vorderen Querreihe durch die Stelleinrichtung zur Höhenverstellung verstellt werden, so dass die entgegengesetzt auf die Bodenbearbeitungswerkzeuge in den beiden Querreihen einwirkenden Seitenkräfte gleich groß werden, damit der Seitenzug verhindert wird.

In einer Ausführungsform ist vorgesehen, dass die vordere Abstützeinrichtung zumindest ein auf dem Boden abrollendes Stützelement und/oder eine Zugdeichsel und/oder eine Kuppeleinrichtung ist.

Eine vorteilhafte Ausgestaltung der Verstelleinrichtung und Verstelleinrichtung lässt sich dadurch erreichen, dass die Verstelleinrichtungen und die Stelleinrichtung als hydraulische Stellelemente ausgebildet sind. Hierdurch ist es möglich, dass die Verstelleinrichtung und die Stelleinrichtung fernbedient ausgestaltet werden können, so dass die Betätigung dieser Einrichtungen vom Schlepper oder durch entsprechende Aktoren automatisiert erfolgen können.

In einer anderen und vereinfachten Ausgestaltung ist vorgesehen, dass die Verstelleinrichtungen als hydraulische Stellelemente und die Stelleinrichtung als mechanisches Stellelement ausgebildet sind.

Bei einem Bodenbearbeitungsgerät, welches an ein vorlaufendes Zugfahrzeug angekoppelt ist, ist vorgesehen, dass zwischen dem Bodenbearbeitungsgerät und dem Zugfahrzeug eine Vorrichtung zur Erfassung der Ausrichtung oder Winkellage von Bodenbearbeitungsgerät zu dem Zugfahrzeug angeordnet ist. Hierdurch kann die Schrägstellung des Bodenbearbeitungsgerätes durch unterschiedlich auf die vordere und hintere Querreihe Bodenbearbeitungswerkzeugen einwirkenden Seitenkräfte in einfacher Weise erfasst werden. Diese von der Vorrichtung erfasste Ausrichtung oder Winkellage des Bodenbearbeitungsgerätes zu dem Zugfahrzeug kann dann dafür verwendet wird, in automatischer Weise die Stelleinrichtung zur Höhenverstellung der Bodenbearbeitungswerkzeuge in der hinteren Querreihe gegenüber den Bodenbearbeitungswerkzeugen in der vorderen Querreihe anzusteuern und oder zu betätigen, um den Seitenzug zu eliminieren.

Eine einfache Ausgestaltung der Vorrichtung zur Erfassung der Ausrichtung oder Winkellage wird dadurch erreicht, dass die Vorrichtung zur Erfassung der Ausrichtung oder Winkellage eine Winkelmesseinrichtung ist.

Eine automatische Einstellung der Arbeitstiefe der Werkzeuge des Bodenbearbeitungsgerätes zur Vermeidung von Seitenzug, auch bei stärker wechselnden Bodenverhältnissen und Bodenwiderständen, lässt sich dadurch erreichen, dass die Vorrichtung zur Erfassung der Ausrichtung oder Winkellage mit der Stelleinrichtung verbunden ist und bei Abweichung von dem vorgegebenden Sollwert Stellsignale an die motorische Stelleinrichtung übermittelt und die Eingriffstiefe der Bodenbearbeitungswerkzeuge in der hinteren Querreihe gegenüber den Bodenbearbeitungswerkzeugen in der vorderen Querreihe entsprechend automatisch verändert.

In einer weiteren Ausgestaltung kann vorgesehen sein, dass die Vorrichtung zur Erfassung der Ausrichtung oder Winkellage eine Anzeigevorrichtung zur Anzeige der von der Vorrichtung ermittelten Werte aufweist. Diese Ausgestaltung eignet sich besonders dann, wenn der Fahrer oder Bediener des Zugfahrzeuges von Hand die Einstellung zu Eliminierung des Seitenzuges vornehmen muss.

Weiterhin kann vorgesehen sein, dass die Vorrichtung zur Erfassung der Ausrichtung oder Winkellage den Schrägzug des Bodenbearbeitungsgerätes gegenüber dem Zugfahrzeug in liegender, insbesondere horizontaler Ebene erfasst.

Anstatt einer Vorrichtung zur Erfassung der Winkellage, wie beispielsweise einer Winkelmesseinrichtung kann auch eine Sensoreinrichtung zur Aufnahme der auf das Bodenbearbeitungsgerät einwirkenden Seitenkräfte vorgesehen sein. Mittels dieser Sensoreinrichtung lassen sich dann beispielsweise die Lagerkräfte an der Lagerung der Scheibenelemente oder die auf die Halterung der Scheibenelemente oder Querbalken einwirkenden Seitenkräfte ermitteln.

Weitere Einzelheiten der Erfindung sind der Beispielsbeschreibung und den Zeichnungen zu entnehmen. Die Zeichnungen zeigen
- Fig.1: ein gezogenes Bodenbearbeitungsgerät in der Position ohne Seitenzug in der Draufsicht, in Prinzipdarstellung,
- Fig.2: das gezogene Bodenbearbeitungsgerät in der Position, in welcher der Seitenzug auftritt in der Draufsicht, in Prinzipdarstellung,

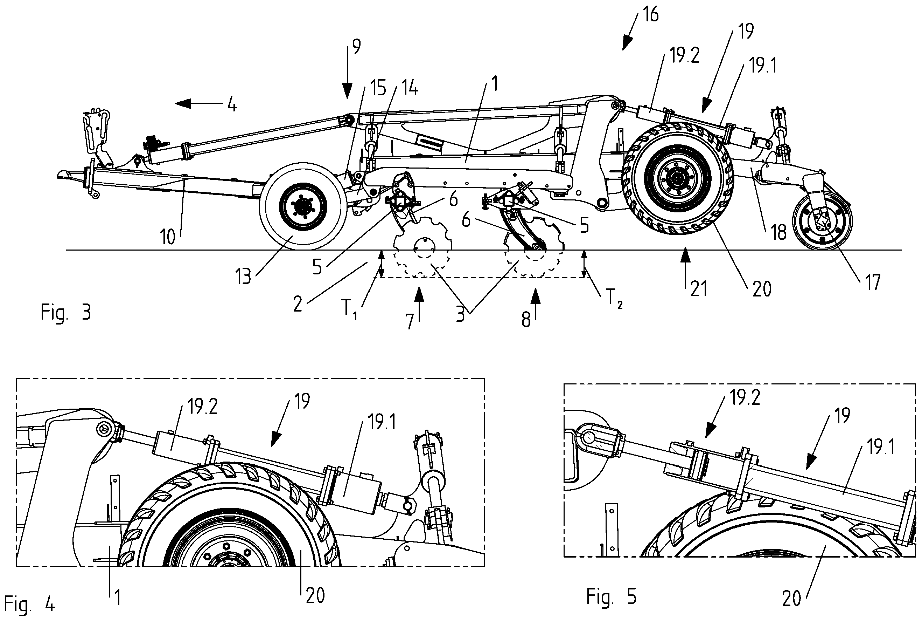

- Fig.3: das Bodenbearbeitungsgerät mit gleicher Einstellung der Arbeitstiefe der hinteren und vorderen Bodenbearbeitungswerkzeuge in Seitenansicht und in Prinzipdarstellung,
- Fig.4: die hintere Verstelleinrichtung der Stelleinrichtung zur Höhenverstellung der Bodenbearbeitungswerkzeuge in der hinteren Querreihe gemäß der Einstellung nach Fig.3, jedoch in vergrößerter und ausschnittsweiser Darstellung,
- Fig.5: die Stelleinrichtung gemäß Fig.4, jedoch im Teilschnitt und vergrößerter Darstellung,

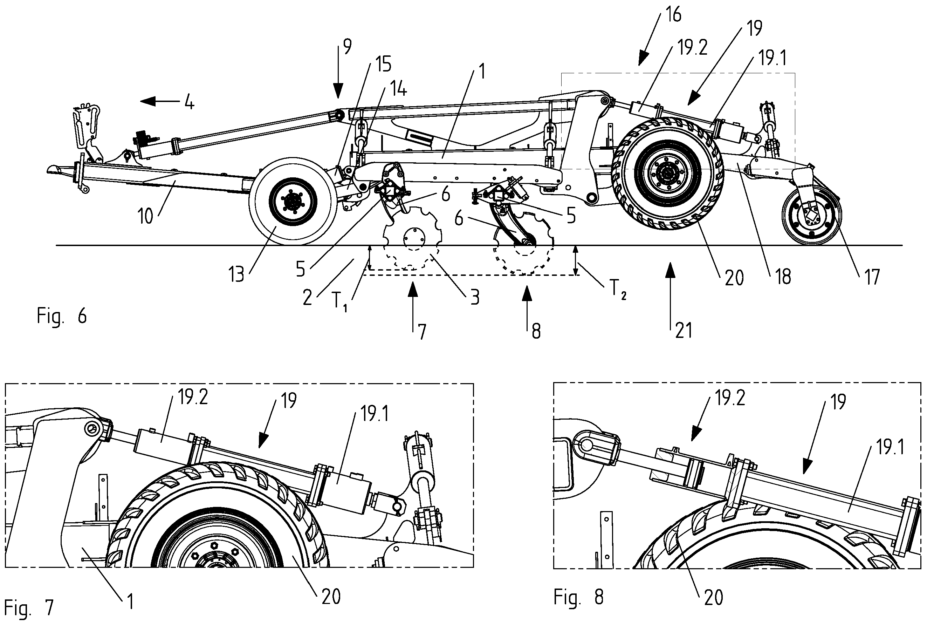

- Fig.6: das Bodenbearbeitungsgerät mit ungleicher Einstellung der Arbeitstiefe der hinteren und vorderen Bodenbearbeitungswerkzeuge zur Eliminierung des Seitenzuges in Seitenansicht und in Prinzipdarstellung,
- Fig.7: die hintere Verstelleinrichtung der Stelleinrichtung zur Höhenverstellung der Bodenbearbeitungswerkzeuge in der hinteren Querreihe gemäß der Einstellung nach Fig.6, jedoch in vergrößerter und ausschnittsweiser Darstellung und
- Fig.8: die Stelleinrichtung gemäß Fig.7, jedoch im Teilschnitt und vergrößerter Darstellung.

Das im Ausführungsbeispiel dargestellte gezogene Bodenbearbeitungsgerät weist den Rahmen 1 auf, an dem in zwei Querreihen hintereinander angeordnete und in den Boden 2 eingreifende Bodenbearbeitungswerkzeuge 3 angeordnet sind. Zur Anordnung dieser Bodenbearbeitungswerkzeuge 3 sind an dem Rahmen 1 in Fahrtrichtung 4 beabstandet zueinander die beiden Querbalken 5 angeordnet. An diesen Querbalken 5 sind die als drehbar angeordnete Scheibenelemente ausgebildeten Bodenbearbeitungswerkzeuge 3 über Haltearme 6 in bekannter Weise angeordnet. Die Scheibenelemente 5 sind schräg zur Fahrtrichtung 4 angestellt. Zusätzlich können die Scheibenelemente 5 auch noch geneigt zur Senkrechten angestellt sein. Die Scheibenelemente 5 sind in der vorderen Querreihe 7 entgegengesetzt schräg zu den Scheibenelementen 5 in der hinteren Querreihe 8 angestellt.

Auf der Vorderseite 9 des Rahmens 1 ist die Zugdeichsel 10 zur Ankopplung des Bodenbearbeitungsgerätes an in die Zugvorrichtung 11 des Ackerschleppers 12 angeordnet. Weiterhin stützt sich der Rahmen 1 mit den Bodenbearbeitungswerkzeugen 5 auf seiner Vorderseite 9 über als Laufräder 13 ausgebildete auf dem Boden 2 abrollende Abstützeinrichtung ab. Die Laufräder 13 sind über Schwenkarme 14 der Abstützeinrichtung verschwenkbar an dem Rahmen angeordnet. Zwischen den Schwenkarmen 14 der Abstützeinrichtung unter dem Rahmen 1 sind im Ausführungsbeispiel als Hydraulikzylinder ausgebildete Verstelleinrichtungen 15 angeordnet. Über diese Hydraulikzylinder 15 können die Laufräder 13 verschwenkt werden, so dass der Rahmen 1 mit dem Bodenbearbeitungswerkzeugen 5 zur Einstellung der Eingriffstiefe T1 und T2 der Bodenbearbeitungswerkzeuge 5 in dem Boden 2 in der Höhe verstellt werden kann.

Auf der Rückseite 16 des Rahmens 1 und hinter den Bodenbearbeitungswerkzeugen 5 der hinteren Querreihe 8 ist die die auf dem Boden abrollende, im Ausführungsbeispiel als Bodenwalze ausgebildete Nachlaufeinrichtung 17 angeordnet. Die Bodenwalze 17 ist über Tragarme 18 der Nachlaufeinrichtung verschwenkbar an dem Rahmen 1 angeordnet. Zwischen den Tragarmen 18 der Nachlaufeinrichtung 17 und dem Rahmen 1 ist die im Ausführungsbeispiel die Verstelleinrichtung 19, die den Hydraulikzylinder 19.1 aufweist, angeordnet. Mittels dieser Hydraulikzylinder 19.1 der Verstelleinrichtung 19 kann die Bodenwalze 17 verschwenkt werden, so dass der Rahmen 1 mit dem Bodenbearbeitungswerkzeugen 5 zur Einstellung der Eingriffstiefe der Bodenbearbeitungswerkzeuge 5 in dem Boden 2 im Zusammenspiel mit den Laufrädern 13 in der Höhe verstellt werden kann.

Es ist auch möglich, dass anstelle der als hydraulische Stellelemente ausgebildeten Hydraulikzylinder 15 und 19.1 mechanische Stellelemente, wie beispielsweise Schraubenspindeln in nicht dargestellter Weise eingesetzt werden.

Zwischen dem Rahmen 1 und den Bodenwalzen 17 ist das die Laufräder 20 aufweisende aushebbare und absenkbare Fahrwerk 21 in bekannter Weise angeordnet.

In der Grundeinstellung wird der Rahmen 1 mit dem Bodenbearbeitungswerkzeugen 5 so eingestellt, dass die Scheibenelemente 5 der vorderen Querreihe 8 mit der gleichen Eingriffstiefe T1 in dem Boden 2 wie die Scheibenelemente 5 der hinteren Querreihe 9 mit der Eingriffstiefe T2 in dem Boden 2 über die Hydraulikzylinder 15 und 19.1 zur Einstellung der Laufräder 13 und der Bodenwalze 17 eingestellt werden.

Die Hydraulikzylinder 15 und 19.1 sind über nicht dargestellte Hydraulikleitungen mit der Hydraulikanlage des Ackerschleppers 12 verbunden und können über diese Hydraulikanlage mit entsprechend zugeordneten Stellelementen verstellt werden, so dass hierüber die Eingriffstiefe T1 und T2 der Scheibenelemente 5 der hinteren 8 und vorderen Querreihe 7 entsprechend verändert und somit eingestellt werden kann.

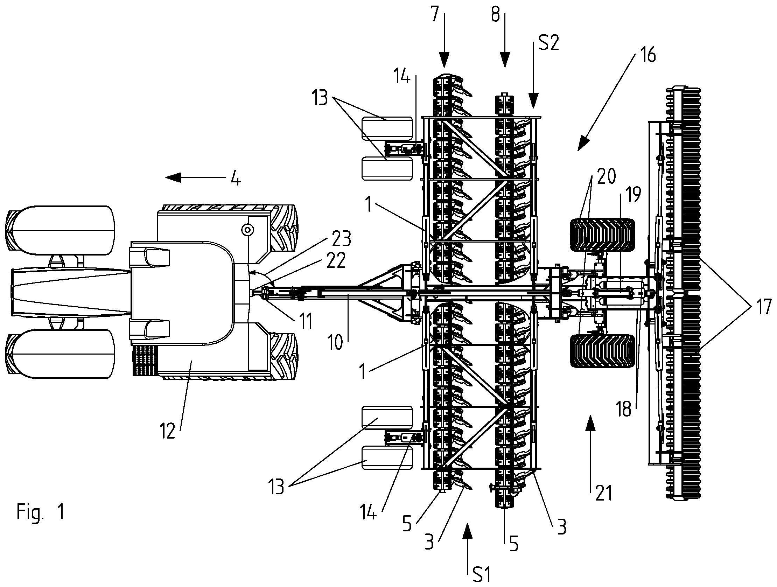

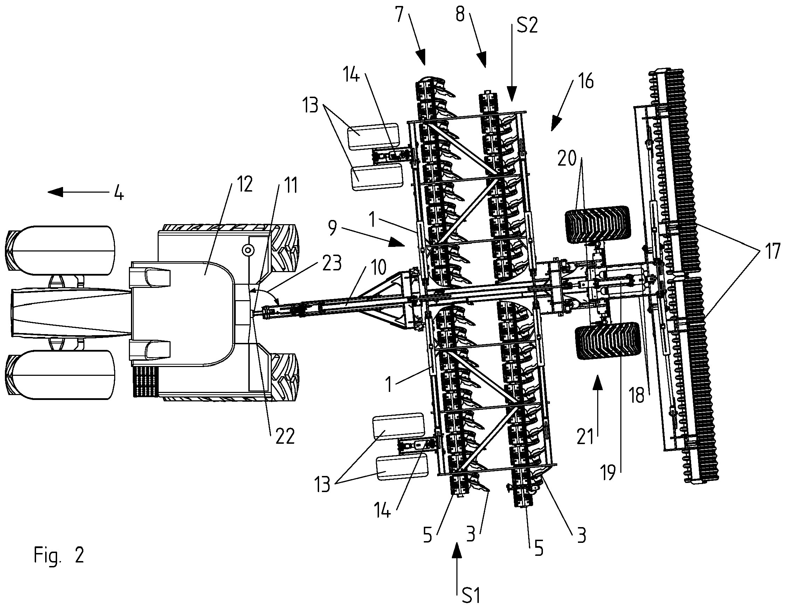

In der Praxis kommt es bei unbearbeiteten Böden häufiger vor, dass das Aufbrechen des Bodens durch die Scheibenelemente 5 in der vorderen Querreihe 7 eine größere Kraft erfordert als die von den Scheibenelementen 5 in der hinteren Querreihe 8 zu verrichtende Bodenbearbeitung. Hierdurch sind die auf die Scheibenelemente 5 in der vorderen Querreihe 9 einwirkenden Seitenkräfte S1 teilweise wesentlich größer als die entgegengesetzt auf die Scheibenelemente 5 in der hinteren Querreihe 9 einwirkenden Seitenkräfte S2. Hierdurch stellt das sich an sich in gewünschter Weise mittig gemäß der Darstellung nach Fig.1 hinter dem Ackerschlepper 12 hergezogene Bodenbearbeitungsgeräte entsprechend schräg, wie in der Prinzipdarstellung in der Fig.2 dargestellt ist. Um nun zu erreichen, dass aufgrund der unterschiedlich großen Seitenkräfte S1 und S2 bei gleicher Tiefeneinstellung T1 und T2 der Scheibenelemente 5 in dem Boden 2 das Bodenbearbeitungsgerät dennoch mittig entsprechend der Darstellung in Fig.1 wieder hinter dem Schlepper 12 hinterher gezogen werden kann, muss die jeweilige Eindringtiefe T1 und T2 der Scheibenelemente 5 in den beiden Querreihen 7 und 8 zueinander verändert werden. Dieses geschieht im Ausführungsbeispiel über die hintere Verstelleinrichtung 19 zur Höhenverstellung der Bodenbearbeitungswerkzeuge 5 in der hinteren Querreihe 8 gegenüber den Bodenbearbeitungswerkzeugen 5 in der vorderen Querreihe 7 zugeordnet ist. Um dieses in vereinfachter Weise zu erreichen, weist die Verstelleinrichtung 19 neben dem Hydraulikzylinder 19.1 ein weiteres Stellelement 19.2 in Form eines weiteren zugeordneten Hydraulikzylinders auf. Im Ausführungsbeispiel wird, wenn die auf die Scheibenelemente 5 der vorderen Querreihe 8 einwirkenden Seitenkräfte S1 größer als die auf die Scheibenelemente 5 hinteren Querreihe 9 einwirkenden Seitenkräfte S2 sind durch Verstellen des Stellelementes 19.2 die Eindringtiefe T2 der Scheibenelemente 5 in der hinteren Querreihe 9 vergrößert, so dass die auf die Scheibenelemente 5 in der hinteren Querreihe 9 einwirkenden Seitenkräfte S2 zumindest annähernd die gleiche Größe wie die Seitenkräfte S1 aufweist. Dies wird dadurch erreicht, dass durch die Bodenwalze 17 gegenüber dem Rahmen 1 durch Einfahren bzw. Verkürzen des Stellelementes 19.2 entsprechend angehoben wird. Hierdurch wird wieder eine mittige Lage des Bodenbearbeitungsgerätes hinter dem Ackerschlepper 12 erreicht. Die Betätigung des Stellelement des 19.2, welcher im Ausführungsbeispiel als Hydraulikzylinder ausgebildet ist, zur Veränderung der Arbeitstiefe T2 erfolgt von durch entsprechendes betätigen eines Betätigungshebel der Hydraulikanlage des Schleppers durch den Fahrer des Ackerschleppers 12.

Es auch möglich, dass Stellelement 19.2 als mechanisches Element, beispielsweise in nicht dargestellter Weise als Schraubenspindel auszubilden.

Um die Arbeitstiefenverstellung der Scheibenelemente 5 in der vorderen Querreihe 7 zu den Scheibenelementen 5 in der hinteren Querreihe 8 in automatisierter Weise vornehmen zu können, dass ist zwischen der Zugdeichsel 10 des Bodenbearbeitungsgerätes und dem als Ackerschlepper 12 ausgebildeten Zugfahrzeug eine Vorrichtung 22 zur Erfassung der Ausrichtung oder Winkellage 23 von Bodenbearbeitungsgerät zu dem Zugfahrzeug 12 angeordnet ist. Im Ausführungsbeispiel ist diese Vorrichtung zur Erfassung der Ausrichtung oder Winkellage als Winkelmesseinrichtung 22 ausgebildet. Somit ist über die Winkelmesseinrichtung 22 der Schrägzug des Bodenbearbeitungsgerätes gegenüber dem Zugfahrzeug 12 in liegender, insbesondere horizontaler Ebene zu erfassen.

Die Winkelmesseinrichtung 22 ist in geeigneter Weise, beispielsweise über eine nicht dargestellte elektronische Steuer- und oder Regeleinrichtung mit der Stelleinrichtung 19.2 bzw. dessen Betätigungsvorrichtung verbunden. Hierbei ist die Ansteuerung der Betätigungsvorrichtung bzw. der Stelleinrichtung 19.2 so ausgelegt, dass bei Abweichung von dem vorgegebenden Sollwert Stellsignale an die motorische Stelleinrichtung 19.2 bzw. dessen Betätigungsvorrichtung übermittelt werden, so dass die Eingriffstiefe T1 bzw. T2 der Bodenbearbeitungswerkzeuge in der hinteren Querreihe 8 gegenüber den Bodenbearbeitungswerkzeugen in der vorderen Querreihe 7 zueinander entsprechend automatisch verändert wird.

Auch kann in nicht dargestellter Weise die als Winkelmesseinrichtung 22 ausgebildete Vorrichtung zur Erfassung der Ausrichtung oder Winkellage eine nicht dargestellte Anzeigevorrichtung zur Anzeige der von der Vorrichtung 22 ermittelten Werte aufweisen. Diese Ausgestaltung eignet sich besonders dann zur Ansteuerung der Stelleinrichtung 19.2, wenn keine automatische Ansteuerung der Stelleinrichtung 19.2 entsprechend der gemessenen Winkelwerte erfolgt.

## Patentansprüche

1. Bodenbearbeitungsgerät mit einem Rahmen (1), an dem in zumindest zwei Querreihen (7, 8) hintereinander angeordnete und in den Boden (2) eingreifende und schräg zur Fahrtrichtung (4) angestellte Bodenbearbeitungswerkzeuge (5), insbesondere drehbar angeordnete Scheibenelemente, angeordnet sind, wobei die Bodenbearbeitungswerkzeuge (5) in der einen Querreihe (7) entgegengesetzt schräg zu den Bodenbearbeitungswerkzeugen (5) in der anderen Querreihe (8) angeordnet sind, wobei der Rahmen (1) sich auf seiner Rückseite (16) über zumindest eine auf dem Boden (2) abrollende Nachlaufeinrichtung (7), der zumindest eine zwischen dem Rahmen (1) und der Nachlaufeinrichtung (7) angeordnete Verstelleinrichtung (19, 19.1, 19.2) zugeordnet ist, in höhenverstellbarer Weise und auf seiner Vorderseite (9) über zumindest eine auf dem Boden (2) abrollende Abstützeinrichtung (13), der zumindest eine zwischen dem Rahmen (1) und der Abstützeinrichtung (13) angeordnete Verstelleinrichtung (15) zugeordnet ist, in höhenverstellbarer Weise angeordnet ist, **dadurch gekennzeichnet, dass** der hinteren und/oder vorderen Verstelleinrichtung (19, 19.1) eine Stelleinrichtung (19.2) zur Höhenverstellung der Bodenbearbeitungswerkzeuge (5) in der hinteren Querreihe (8) gegenüber den Bodenbearbeitungswerkzeugen (5) in der vorderen Querreihe (7) zugeordnet ist.

2. Bodenbearbeitungsgerät nach Anspruch 1, **dadurch gekennzeichnet, dass** die vordere Abstützeinrichtung zumindest ein auf dem Boden (2) abrollendes Stützelement (13) und/oder eine Zugdeichsel (10) und/oder eine Kuppeleinrichtung (11) ist.

3. Bodenbearbeitungsgerät nach einem zumindest der vorstehenden Ansprüche, **dadurch gekennzeichnet, dass** die Verstelleinrichtungen (15, 19, 19.1) und die Stelleinrichtung (19.2) als hydraulische Stellelemente ausgebildet sind.

4. Bodenbearbeitungsgerät nach einem zumindest der vorstehenden Ansprüche 1 und/oder 2, **dadurch gekennzeichnet, dass** die Verstelleinrichtungen (15, 19.1) als hydraulische Stellelemente und die Stelleinrichtung als mechanisches Stellelement ausgebildet sind.

5. Bodenbearbeitungsgerät nach zumindest einem der vorstehenden Ansprüche, wobei das Bodenbearbeitungsgerät an ein vorlaufendes Zugfahrzeug (12) angekoppelt ist, **dadurch gekennzeichnet, dass** zwischen dem Bodenbearbeitungsgerät und dem Zugfahrzeug (12) eine Vorrichtung (22) zur Erfassung der Ausrichtung oder Winkellage von Bodenbearbeitungsgerät zu dem Zugfahrzeug (12) angeordnet ist.

6. Bodenbearbeitungsgerät nach Anspruch 5, **dadurch gekennzeichnet, dass** die Vorrichtung (22) zur Erfassung der Ausrichtung oder Winkellage eine Winkelmesseinrichtung ist.

7. Bodenbearbeitungsgerät nach einem zumindest der vorstehenden Ansprüche 5 und/oder 6, **dadurch gekennzeichnet, dass** die Vorrichtung (22) zur Erfassung der Ausrichtung oder Winkellage mit der Stelleinrichtung (19.2) verbunden ist und bei Abweichung von dem vorgegebenen Sollwert Stellsignale an die motorische Stelleinrichtung (19.2) übermittelt und die Eingriffstiefe (T1, T2) der Bodenbearbeitungswerkzeuge (5) in der hinteren Querreihe (8) gegenüber den Bodenbearbeitungswerkzeugen (5) in der vorderen Querreihe (7) entsprechend automatisch verändert.

8. Bodenbearbeitungsgerät nach einem zumindest der vorstehenden Ansprüche 5 und/oder 6, **dadurch gekennzeichnet, dass** die Vorrichtung (22) zur Erfassung der Ausrichtung oder Winkellage eine Anzeigevorrichtung zur Anzeige der von der Vorrichtung ermittelten Werte aufweist.

9. Bodenbearbeitungsgerät nach einem zumindest der vorstehenden Ansprüche 5 und/oder 6, **dadurch gekennzeichnet, dass** die Vorrichtung (22) zur Erfassung der Ausrichtung oder Winkellage (23) den Schrägzug des Bodenbearbeitungsgerätes gegenüber dem Zugfahrzeug in liegender, insbesondere horizontaler Ebene erfasst.

## Claims

1. Soil cultivation device with a frame (1), on which soil cultivation tools (5), which are arranged one behind another in at least two transverse rows (7, 8), engage in the soil (2) and are positioned obliquely with respect to the direction of travel (4), are arranged, in particular rotatably arranged disc elements, wherein the soil cultivation tools (5) in the one transverse row (7) are arranged oppositely obliquely with respect to the soil cultivation tools (5) in the other transverse row (8), wherein the frame (1) is arranged in a height-adjustable manner on its rear side (16) via at least one trailing device (7), which rolls on the soil (2) and to which at least one adjustment device (19, 19.1, 19.2) arranged between the frame (1) and the trailing device (7) is assigned, and is arranged in a height-adjustable manner on its front side (9) via at least one supporting device (13), which rolls on the soil (2) and to which at least one adjustment device (15) arranged between the frame (1) and the supporting device (13) is assigned, **characterized in that** an adjusting device (19.2) for adjusting the height of the soil cultivation tools (5) in the rear transverse row (8) in relation to the soil cultivation tools (5) in the front transverse row (7) is assigned to the rear and/or front adjustment device (19, 19.1).

2. Soil cultivation device according to Claim 1, **characterized in that** the front supporting device is at least one support element (13) rolling on the soil (2), and/or a drawbar (10) and/or a coupling device (11).

3. Soil cultivation device according to either of at least the preceding claims, **characterized in that** the adjustment devices (15, 19, 19.1) and the adjusting device (19.2) are designed as hydraulic adjusting elements.

4. Soil cultivation device according to either of at least the preceding Claims 1 and/or 2, **characterized in that** the adjustment devices (15, 19.1) are designed as hydraulic adjusting elements, and the adjusting device is designed as a mechanical adjusting element.

5. Soil cultivation device according to at least one of the preceding claims, wherein the soil cultivation device is coupled to a towing vehicle (12) running on ahead, **characterized in that** a device (22) for detecting the orientation or angular position of the soil cultivation device with respect to the towing vehicle (12) is arranged between the soil cultivation device and the towing vehicle (12).

6. Soil cultivation device according to Claim 5, **characterized in that** the device (22) for detecting the orientation or angular position is an angle-measuring device.

7. Soil cultivation device according to either of at least the preceding Claims 5 and/or 6, **characterized in that** the device (22) for detecting the orientation or angular position is connected to the adjusting device (19.2) and, in the event of a deviation from the predetermined desired value, transmits adjusting signals to the motor-driven adjusting device (19.2) and correspondingly automatically changes the engagement depth (T1, T2) of the soil cultivation tools (5) in the rear transverse row (8) in relation to the soil cultivation tools (5) in the front transverse row (7).

8. Soil cultivation device according to either of at least the preceding Claims 5 and/or 6, **characterized in that** the device (22) for detecting the orientation or angular position has a display device for displaying the values determined by the device.

9. Soil cultivation device according to either of at least the preceding Claims 5 and/or 6, **characterized in that** the device (22) for detecting the orientation or angular position (23) detects the diagonal pull of the soil cultivation device in relation to the towing vehicle in a lying, in particular horizontal plane.

## Revendications

1. Appareil de traitement du sol présentant un bâti (1) sur lequel sont disposées au moins deux rangées transversales (7, 8) d'outils (5) de traitement du sol disposés les uns derrière les autres, engageant le sol (2) et placés obliquement par rapport à la direction de déplacement (4), en particulier des éléments en disque disposés de manière à pouvoir tourner,
les outils (5) de traitement du sol d'une rangée transversale (7) étant disposés obliquement mais sous un angle opposé aux outils (5) de traitement du sol de l'autre rangée transversale (8),
le bâti (1) étant disposé de manière ajustable en hauteur sur son côté arrière (16) par au moins un dispositif de suivi (7) roulant sur le sol (2) et auquel est associé au moins un dispositif d'ajustement (19, 19.1, 19.2) disposé entre le bâti (1) et le dispositif de suivi (7), et de manière ajustable en hauteur sur son côté avant (9) par au moins un dispositif de soutien (13) qui roule sur le sol (2) et auquel est associé un dispositif d'ajustement (15) disposé entre le bâti (1) et le dispositif de soutien (13),
**caractérisé en ce que**
un dispositif de réglage (19.2) qui ajuste en hauteur les outils (5) de traitement du sol de la rangée transversale (8) par rapport aux outils (5) de traitement du sol de la rangée transversale (7) est associé au dispositif d'ajustement arrière et/ou au dispositif d'ajustement avant (19, 19.1).

2. Appareil de traitement du sol selon la revendication 1, **caractérisé en ce que** le dispositif d'appui avant est au moins un élément de soutien (13) qui roule sur le sol (2), un timon de traction (10) et/ou un dispositif d'accouplement (11).

3. Appareil de traitement du sol selon au moins l'une des revendications précédentes, **caractérisé en ce que** les dispositifs d'ajustement (15, 19, 19.1) et le dispositif de réglage (19.2) sont configurés comme éléments hydrauliques de réglage.

4. Appareil de traitement du sol selon au moins l'une des revendications 1 et/ou 2 qui précèdent, **caractérisé en ce que** les dispositifs d'ajustement (15, 19.1) sont configurés comme éléments hydrauliques de réglage et le dispositif de réglage comme élément mécanique de réglage.

5. Appareil de traitement du sol selon au moins l'une des revendications précédentes, dans lequel l'appareil de traitement du sol est accouplé à un véhicule tracteur (12) disposé en avant, **caractérisé en ce qu'**un ensemble (22) de détection de l'orientation ou de la position angulaire de l'appareil de traitement du sol par rapport au véhicule tracteur (12) est disposé entre l'appareil de traitement du sol et le véhicule tracteur (12).

6. Appareil de traitement du sol selon la revendication 5, **caractérisé en ce que** l'ensemble (22) de saisie de l'orientation ou de la position angulaire est un dispositif de mesure d'angle.

7. Appareil de traitement du sol selon au moins l'une des revendications 5 et/ou 6 qui précèdent, **caractérisé en ce que** l'ensemble (22) de détection de l'orientation ou de la position angulaire est relié au dispositif de réglage (19.2) et **en ce qu'**en cas d'écart par rapport à une valeur de consigne prédéterminée, des signaux de réglage sont transmis au dispositif de réglage (19.2) motorisé et la profondeur d'engagement (T1, T2) des outils (5) de traitement du sol de la rangée transversale (8) est modifiée automatiquement par rapport aux outils (5) de traitement du sol de la rangée transversale (7) de manière appropriée.

8. Appareil de traitement du sol selon au moins l'une des revendications 5 et/ou 6 qui précèdent, **caractérisé en ce que** l'ensemble (22) de détection de l'orientation ou de la position angulaire présente un dispositif d'affichage qui affiche les valeurs déterminées par l'ensemble.

9. Appareil de traitement du sol selon au moins l'une des revendications 5 et/ou 6 qui précèdent, **caractérisé en ce que** l'ensemble (22) de détection de l'orientation ou de la position angulaire (23) saisit la position oblique de l'appareil de traitement du sol par rapport au véhicule tracteur dans le plan dans lequel il est situé et en particulier dans le plan horizontal.
